# EUROPEAN PATENT APPLICATION

(11) **EP 3 637 858 A1**
(43) Date of publication of application: **15.04.2020**
(21) Application number: 18199250.4
(22) Date of filing: 09.10.2018
(51) Int. Cl.: H04W 48/08, H04W 48/16, H04W 4/70

(54) **METHOD FOR SIGNALLING SYSTEM INFORMATION**

(71) Applicant: Gemalto M2M GmbH, 81541 Munich (DE)
(72) Inventor: BREUER, Volker, 16727 BOETZOW (DE)
(74) Representative: Grevin, Emmanuel

(57) **Abstract**

The present invention relates to a method for a base node of a cellular network for signalling system information items to at least one user equipment camping on the base node, the base node being configured to signal system information items in one or more system information blocks, wherein at least one system information block is transmitted only for a limited period of time lasting at least one broadcast modification period, hereinafter the on-demand system information provisioning period, in response to the base node receiving a request for signalling the at least one system information block by at least one of the user equipments, the base node further signalling a primary block periodically, the method comprising the step of:
- signalling at least during said broadcast modification period in the primary block one first information element indicating whether in at least one system information item of at least one signaled system information block a content change appeared in comparison with the signaled system information blocks signaled prior to said broadcast modification period, and
- signalling during said on-demand system information provisioning period in the primary block one second information element indicating a change in system information block scheduling compared to the scheduled system information prior to said on-demand system information provisioning period.

## Description

### FIELD OF THE INVENTION

The present invention relates to a method for signalling of system information. The invention also pertains to a base node of a cellular network using said method. The invention further relates to a user equipment receiving said signalling. The invention further relates to a method for operating said user equipment.

### BACKGROUND OF THE INVENTION

Generally, in the field of wireless cellular communication it is known that the user equipments operating in a cellular network by virtue of a base node of the cellular network, retrieve information regarding the operation in the cellular network by means of system information broadcasted by the base nodes. Such system information are by now organized in system information blocks (SIBs), each comprising a couple of system information items. The SIB1 comprises the scheduling and change notification concerning all other SIBs. However, as SIB1 includes barring information and has the possibility to include multiple PLMNs the SIB1 is rather large. The user equipment is required to retrieve and decode all system information blocks necessary for its desired activity in order to have all information available for operating in the cellular network. Whenever a change in the content of system information items has happened, the user equipments camping on a base node needs to retrieve the system information blocks. For user equipments operating with a battery, in particular lowcost devices in particular in the context of Internet of Things (IoT), resp. Machine Type Communication (MTC), the retrieval of the whole set of system information blocks has a bad impact on the power consumption, and consequently the battery lifetime.

To mitigate this situation it is currently suggested in ETSI-3GPP TSG-RAN WG2 R2-1802181: "*Introduction of system information acquisition optimization*" to indicate with a system information item broadcasted in one system information block, in particular the Master Information Block (MIB), if a change in the broadcasted SIBs has happened in the past period of time, where this time is considered as the general SIB validity period. So it is sufficient to regularly decode only that respective system information block i.e. the MIB, and only read the SIB1 and the remaining system information blocks in case of a change indication. This is most power efficient because as said SIB1 is a very large SIB.

However, for the coming generations of cellular communication standards it is discussed that part of such system information blocks are signaled on-demand. This is happening still by means of a broadcast, but such on-demand scheduled system information blocks are only signaled, when a user equipment camping on the base node requests it. This means all system information items required by a user equipment to camp on a cell and get access will be regularly broadcasted but system information items concerning neighbor cells or GPS or other feature assistance data will only be provided on-demand.

Means the base node activates the scheduling of said system information blocks and indicates the scheduling information in SIB1 on request. By this mechanisms it is avoided that another user equipment would send a dedicated system information on-demand request for activating scheduling of said system information because user equipments can check via SIB1 whether the on-demand system information blocks they are interested in is momentarily scheduled or not.

This approach raises a problem for all other user equipments camping on said base node relying on the MIB change indication.

If a change in one of the SIBs occurs, in this case SIB1 scheduling information, the MIB would indicate that a change has happened and all user equipments would at least read the SIB1 to evaluate what has happened. This would be a waste of energy for such low end devices as they may have acquired already said SIB earlier and hence just re-read it. The feature MIB indication would no more work because each additionally on-demand scheduled system information block would consequently cause all those user equipments relying on MIB change indication to read the scheduling system information block i.e. SIB1 completely again. This development therefore thwarts the method for power consumption reduction mentioned above. In the extreme, with one user equipment camping on a base node sending permanently requests for on-demand SIB signalling the batteries of all low-cost devices camping on the same base node could be rather quickly be drained.

Therefore it requires a solution to cope with the newest development and still allow for the user equipments to improve its power consumption footprint for system information retrieval.

It is therefore the goal of present invention to overcome the mentioned disadvantages and to propose a solution for an improved signalling of system information by base nodes to user equipments.

Further alternative and advantageous solutions would, accordingly, be desirable in the art.

### SUMMARY OF THE INVENTION

For this it is according to a first aspect of the invention suggested a method for signalling of system information according to claim 1. It is further suggested according to a second aspect of the invention a base node according to claim 8. Further it is suggested according to third aspect of the invention a method for a user equipment according to claim 11. Further it is proposed according to a fourth aspect of the invention a user equipment according to claim 14.

According to the first aspect of the invention it is proposed a method for a base node of a cellular network for signalling system information items to at least one user equipment camping on the base node, the base node being configured to signal system information items in one or more system information blocks, wherein at least one system information block is transmitted only for a limited period of time lasting at least one broadcast modification period, hereinafter the on-demand system information provisioning period, in response to the base node receiving a system information on-demand request for signalling the at least one system information block by at least one of the user equipments, the base node further signalling a primary block (MIB) periodically, the method comprising the step of:
- signalling at least during said on-demand system information provisioning period in the primary block one first information element indicating whether in at least one system information item of at least one signaled system information block a content change appeared in comparison with the one or more system information blocks signaled prior to on-demand system information provisioning period, and
- signalling during said on-demand system information provisioning period in the primary block a second information element indicating whether a change in system information block scheduling appeared compared to the previous broadcast modification period.

The invention relates to a base node of a cellular network in particular configured for implementing the 3GPP technology standard generation of 4G (LTE) or 5G (New Radio), or beyond. The cellular network comprises a plurality of base nodes which form the air interface endpoints for user equipments operating in said cellular network, in other words: The base nodes are the radio access network of the cellular network. In a cellular network comprising a plurality of radio access networks, in particular of different technology standards, base nodes may be assigned to the radio access network of the technology standards they are implementing.

Each base node is connected to other cellular network components, in particular the Mobility Management Entity MME, which is part of the core network and are consequently connected to other networks, if public land networks, or wirelessly, national or international.

For assuring optimal behavior of the user equipments when operating in the cellular network resp. when camping on a specific base node, the base node maintains a set of defined system information items, which are supposed to be made available to the user equipments. This is done by the signalling of system information blocks, in particular by means of a broadcasted signalling. This allows user equipments, even when not camping on the base node, to retrieve such system information items for well accessing the base node.

Per technology standard a set of system information blocks (SIBs) is specified, where for each system information item a specific order and amount of bits is allocated. Some SIBs are signaled more often than others, in particular the SIB1 is frequently broadcasted, as here the most important system information items are made available to the user equipments. One example of such system information items is an indication of access barring. When this bit is set, the user equipments, at least a subset thereof, is not allowed to access the cellular network. In particular in congestion scenarios this is important to massively reduce the network access in order to maintain stability of the cellular network. It is obvious that the user equipments need to access this information as soon as possible. On the other hand for a user equipment it would be extremely time and power consuming to permanently read the full SIB broadcast, in order to figure out a possible change, mainly when there is not a change. This in particular affects battery driven user equipments, in particular Machine Type Communication or loT related devices, like metering devices.

Hence it was already introduced the so called BCCH value tag. This indicates if a content change in at least one of the SIB has happened, compared to the previous broadcast modification period. The broadcast modification period is a predefined time span during which no SIB change happens, while an indication about a SIB change in the BCCH value tag is indicated.

Moreover in the recent evolvement of the technology standards for cellular communication it is found that some of the SIBs do not have to be broadcasted permanently, when none of the user equipment is currently interested in it, due to the fact that the information are available or of no relevance, and nothing has changes. For that it is introduced to allow some SIBs to be signaled only in case a user equipment camping on the base node is requesting it. Typically this happens on a base node level.

The requested one or more SIB is then broadcasted for a predetermined period. This is the on-demand system information provisioning period. Such activation of an on-demand SIB resp. scheduled SIB, is for the BCCH value tag also considered as a SIB change.

A user equipment camping on the base node has hence a need to figure out if a relevant change it is interested in has happened or an on-demand SIB scheduling requested by another user equipment. This is where the inventive method comes into play.

It relates to a base node as set out above, which is able to signal system information items in system information blocks, and at least one system information block is transmitted only for a limited period of time in response to a system information on-demand request from at least one user equipment camping on the base node.

The inventive method addresses the issue that some user equipments are camping on the base node already for a while, and consequently they have already received all relevant information through the system information broadcast. They are only interested in knowing when a real content change happens.

Other user equipments however are quite new and might be interested in what is changed also in regards to on-demand scheduled SIBs.

With the known signalling behavior of a base node these requirements are not compatible.

Therefore the inventive method suggests that the base node signals a primary block which comprises at least two information elements.

The first information element indicates if a content change has happened in at least one of the system information block. For that it is figured out if in a prior to the current broadcast modification period at least one system information item had another value than in this broadcast modification period. If this is the case the corresponding information element will be set for the SIB validity period or if differentiated for the SIB validity period respectively, the system information item in said system information block that was changed. Preferably the first information element is a flag or bit-field which only takes the values 0 and 1. If a content change has happened then the flag is set, otherwise unset, or vice versa. This set flag remains preferably for a given period, in particular the SIB validity period, at least for one broadcast modification period. After expiry of said period it is unset, however if a further content change of a system information item in any system information block occurs while said flag is set, the flag remains set until the SIB validity period related to said new change has expired.

Preferably the primary block is the master information block (MIB) of the scheduled frequency band. Alternatively the information is part of the SIB1, which at least in this case is ruled out to be broadcasted on-demand.

The primary block is periodically signaled, that means permanently data are retrievable for user equipments, typically signaled all 20 or 40ms. In that sense the primary block is signaled practically continuously.

Preferably a content change is a change in the value of at least one of the system information items of at least one of the system information blocks, except scheduling related information of the first system information block.

In this embodiment it is suggested one preferable variant of a content change. This means that the value of at least one system information item is modified compared to the signaled system information block items prior to the current broadcast modification period, however scheduling related information are not taken into account.

Scheduling related information include on the one hand a system information block that is not permanently scheduled. That means an on-demand system information block, that is in some periods scheduled, in others not. As long as the on-demand system information block does not change in the values of the single system information items, this is not rated as "content change".

On the other hand scheduling related information also relates to a system information item of another - preferably permanently scheduled - SIB, which value indicates if at least one on-demand SIB is broadcasted or not.

This exception relates to possible system information items, e.g. in the SIB1, which indicate to the camping user equipments, that a certain on-demand system information block is now scheduled, or not scheduled anymore. If the system information item is dedicated to on-demand SIB scheduling only, a change of this specific system information item is preferably not rated as content change.

According to the inventive method the base node further signals a second information element in the primary block which indicates if a change in the system information scheduling took place compared to the previous period, in particular broadcast modification period. With this second information element it is in particular indicated that an on-demand SIB is scheduled for being transmitted during this on-demand system information provisioning period. Alike the first information element the second information element is in particular a flag with the values 0 or 1, meaning a change in scheduling has happened or not, or vice versa.

For a user equipment requesting from the base node scheduling of a specific SIB, this information is important for detecting when its request is carried out by the base node.

According to a preferred embodiment said change in system information block scheduling is at least one out of the group of:
- activation of system information block transmission in response to said system information on-demand request from at least one user equipment, hereinafter on-demand system information transmission,
- deactivation of on-demand system information transmission.

A change in scheduling may be detected by the base node when one or more of the listed events took place. The first event relates to activation of an on-demand SIB scheduling, the second to the deactivation. Activation means that for a given on-demand system information provisioning period a SIB, which is by this base node normally not scheduled to be broadcasted in each broadcast modification period, is scheduled to be broadcasted. Deactivation means, that the activation is put back.

The second information element preferably indicates a change in system information block scheduling, in particular on-demand SIB scheduling, by setting a bit, when an on-demand SIB is scheduled, and setting the bit in the period when it is deactivated.

Alternatively the bit of the second information element is only set in those periods, where on-demand SIBs are broadcasted, and once this changes the bit is unset again. Of course, the same is achieved when setting the bit when no on-demand SIB is broadcasted and unsetting it, in case an on-demand SIB is broadcasted.

Additionally also a content change may be viewed as a change in scheduling. Preferably this is only done in combination with at least one of the first two options, in particular the activation.

Preferably it is variable if a system information block is on-demand or permanently broadcasted by the base node. This is in particular decided for the base node, in particular decided by the base node, based at least on the history of system information on-demand requests. In that sense the decision preferably takes into account how often a SIB is requested as system information on-demand request. This is in particular advantageous as it allows to fine tune the on-demand scheduling. Consequently this leads to the situation that the second information element is indicating less often a change in system information scheduling. The effect of this situation is that user equipments would need less often to listen to the SIB broadcast, resp. can save requesting a certain SIB, when it is anyhow signaled permanently.

According to another preferred embodiment it is proposed that the first information element indicates said content change for a multiple of the broadcast modification period.

This embodiment relates to the time period for which the respective first information element indicate the respective event. For a user equipment it needs to be detectable that a change has happened, either of the scheduling or of the content of the system information. Hence the first and second information element need to be retrievable for a sufficiently long time. According to this advantageous embodiment it is suggested that the first information element indicates the content change for a multiple of the broadcast modification period.

When considering a content change in one of the system information blocks the first information element will advantageously be set unless the SIB validity period has expired since the change of the information has occurred. The SIB validity period is a multiple of the broadcast modification period.

The SIB validity period is in the cellular technology standards known as indicating the maximum time a system information item stays valid, without re-reading by the user equipment. The SIB validity period may last for regular SIBs up to 3 hours, for M-SIBs up to 24 hours.

According to another preferred embodiment it is proposed that the second information element indicates said change in system information block scheduling for the duration of a validity time of the provided system information. For the second information element it is suggested that it indicates the change of on-demand SIB scheduling for as long as an on-demand system information provisioning period.

This embodiment relates to the time period for which the respective second information element indicates the respective event.

Preferably the second information element is indicating a change in on-demand SIB scheduling as long as the on-demand scheduled SIB is activated, means an on-demand SIB is provided for the respective time period, i.e. the on-demand system information provisioning period on a periodic basis as indicated in the scheduling information. And the base node does not decide about broadcasting that very SIB independent from scheduling requests for that SIB.

With such a timing also sleeping user equipment have a chance to figure out that a change has happened.

Preferably said system information blocks are dedicated for a predefined category of user equipments.

Due to the latest evolvements of the relevant technology standards it is also foreseen to define certain categories of user equipments, in particular machine type communication equipments, also known as Internet of Things (IoT) user equipments. For that purpose it was also introduced dedicated SIBs for such categories of user equipments.

In the case of machine-type communication equipments so-called M-SIBs are defined. Hence it is suggested with this embodiment that the inventive method is applicable to such kind of SIBs for certain categories, in particular exclusively.

In particular such user equipments are aware of power consumption, in particular due to a limited capacity of battery power with a comparable long lifetime expectation. Hence it requires means to save power already for reading SIBs and to be allowed to fall into a longer sleep mode than typically the case for mobile handsets.

Hence it is encompassed in this invention that the method is limited to M-SIBs. According to another preferred embodiment it is proposed that the base node is configured to receive from a user equipment a system information on-demand request for on-demand scheduling of at least one system information block, wherein in response the method further comprises for the base node the step of signalling said at least one system information block, and the step of starting to signal in the primary block the second information element indicating that the scheduled one or more system information blocks differ from the one or more signaled system information blocks of previous broadcast modification period.

This embodiment relates to the reception of a system information on-demand request at the base node from a camping user equipment concerning an on-demand SIB scheduling. In response the base node decides about signalling the requested SIB.

The system information on-demand request typically is transmitted on a dedicated channel, and comprises an indication depicting the requested SIB. Preferably each SIB has an indication which is to be provided with the system information on-demand request by the user equipment.

This scheduling of the requested SIB does not necessarily take place in the broadcast modification period following reception of the system information on-demand request from the user equipment.

Hence it requires an indication for the requesting user equipment that resp. if the requested SIB is scheduled or not. This is preferably carried out at least with the second information element.

In addition it is advantageous to indicate in general that on-demand SIB is now scheduled so that other user equipments also interested in said SIB can refrain from launching additional scheduling requests.

However the first information element is not dedicated to indicate a content change in this situation, at least in case none of the scheduled SIBs contain a system information item unrelated to scheduling, which content has changed compared to prior to the imminent broadcast modification period.

In another preferred embodiment it is proposed the step of further comprising deriving from the system information on-demand request from the user equipment comprises an indication about the number of broadcast modification periods the on-demand system information provisioning period shall last, and wherein the step of signalling the second information element lasts the indicated number of broadcast modification periods.

With this embodiment additionally the requesting user equipment gets the opportunity to define for how long the requested on-demand SIB is supposed to be signaled.

The duration is preferably provided by the number of broadcast modification periods.

Hence through this embodiment the user equipment gets the capability to individually define the duration of the on-demand system information provisioning period.

The base node consequently is expected to signal the requested on-demand SIB for the requested number of broadcast modification periods.

Preferably a predefined maximum and/or minimum of broadcast modification periods is accepted by the base node, hence when the system information on-demand request exceeds that corridor, that in particular the maximum/minimum value is taken instead the requested number.

It also can be considered here that for a user equipment operating in coverage enhancements i.e. needing multiple transmission to reliably decode a signaled content, the transmission of the system information on-demand request with a corresponding number of repetitions would be considered as indication how long the on-demand SIB provisioning shall last. In other words, the method comprises for the base node to derive from the received system information on-demand request the coverage enhancement mode, resp. coverage enhancement level, resp. the number of required repetitions for the requesting user equipment to fully decode the on-demand scheduled system information. This information is consequently considered for deriving the duration of the on-demand system information provisioning period. This can mean, that an on-demand SIB requested from a user equipment operating in normal mode will be scheduled shorter than an on-demand SIB requested from a user equipment operating in coverage enhancement mode.

If two user equipment request the same on-demand SIB, then the larger value of the indicated broadcast modification periods the on-demand SIB provisioning shall last is preferably chosen.

According to the second aspect of the invention it is proposed a base node of a cellular network configured for signalling system information items to at least one user equipment camping on the base node, the base node being configured to signal system information items in one or more system information blocks, wherein at least one system information block is transmitted only for a limited period of time lasting at least one broadcast modification period, hereinafter the on-demand system information provisioning period, in response to the base node receiving a system information on-demand request for signalling the at least one system information block by at least one of the user equipments, the base node further signalling a primary block periodically, wherein the base node is configured to signal at least during said broadcast modification period in the primary block one first information element indicating whether in at least one system information item of at least one signaled system information block a content change appeared in comparison with the one or more system information blocks signaled prior to the broadcast modification period, and to signal during said on-demand system information provisioning period in the primary block a second information element indicating whether a change in system information block scheduling appeared compared to the scheduled system information prior to said on-demand system information provisioning period.

The base node is part of a cellular network and implementing at least one technology standard. The base node comprises in particular receiving and transmitting circuitry for communicating over the air interface with a plurality user equipments. Further it has a typically wired connection to other components of the cellular network. Further it comprises processing circuitry for executing operating software, including that for carrying out the method according to the first aspect of the invention. Additionally it comprises volatile and/or permanent memory for storing in particular the software and configuration data, including the configuration and values for the system information blocks.

The second aspect shares the advantages of the first aspect of the invention.

According to a third aspect of the invention it is proposed a method for operating a user equipment configured for operating in a cellular network by means of a base node, the user equipment being configured to retrieve one or more system information blocks signaled by the base node, comprising the steps of:
retrieving the primary block comprising a first information element and a second information element,
deciding based on the values of the first information element and the second information element, about retrieving at least one of the plurality of system information blocks.

This aspect of the invention relates to user equipment operating with base nodes according to the second aspect of the invention.

The user equipment according to this aspect of the invention is an user end device designated for communication according to one of the known wireless technology standards, like 4G, 5G or beyond with the cellular network. The user equipment is preferably equipped with the necessary circuitry for communicating over the air interface with said base nodes. This comprises in particular transceiver circuitry, including receiving and transmitting capabilities. The user equipment resp. its transceiver is configured to receive and decode signals from base nodes. Before exchanging signals the user equipment synchronizes with a base node and eventually registers in the cellular network. The base node where the user equipment is operating with is called hereinafter the serving base node.

The user equipment is configured to receive system information signaled by the serving base node. Advantageously the user equipment is configured to receive system information broadcasted by base node, where the user equipment is not yet camping on, but has synchronized. in the latter case the system information facilitate in particular to camp on said base node. According to this aspect of the invention it is suggested that the user equipment retrieves from the base node it is operating with a first and a second information element as part of the base node's primary block, in particular the MIB. Based on that the user equipment can figure out if it is useful to retrieve from the broadcast at least a subset of the broadcasted system information. This decision is in particular driven first by the fact if the user equipment has already during the time of camping on the base node retrieved all - means the for the user equipment relevant - system information.

According to an advantageous embodiment it is suggested that after completely receiving the plurality of system information blocks the step of receiving a system information block only in case the first information element indicates a content change.

With this embodiment the user equipment decodes the system information broadcast only when it receives an indication about a content change. Otherwise it sticks to the content of the stored system information received earlier unless validity period of said information has expired. It retrieves the indication on the content change the first information element of the primary block.

This may in particular take place not only direct after the content change took place, but also after some sleep time of the user equipment. For that the first information element is indicating sufficiently long the content change. At most this is done for a SIB validity period.

This embodiment is advantageous as it allows the user equipment first to sleep and second to regularly check the primary block if a content change has happened. This reduces in particular the power consumption without missing a change in the system information.

Preferably the user equipment maintains locally in the volatile or permanent memory a copy of the values of the system information items. For that when first camping on the base node the complete set of system information items, at least those necessary for the user equipment, is retrieved once and memorized.

All following content changes then trigger the setting in the first information element, and consequently the user equipment for reading the broadcast.

Preferably the user equipment retrieves the system information block 1, which in particular indicates in which SIB a content change has happened. Then the user equipment retrieves the broadcast as long as it needs to receive the system information items of the system information block, where the content change has happened.

According to another preferred embodiment it is proposed to request from the base node on-demand scheduling of at least one system information block, wherein the method further comprises the step of receiving said at least one system information block in case the second information element indicates a change in system information block scheduling.

With this embodiment the user equipment is put into the position to request from the base node to schedule an on-demand SIB, that means a SIB which is not constantly scheduled to be received.

When the user equipment requested the on-demand SIB, it is informed by the second information element signaled by the base node in the primary block, that a change in scheduling took place. This relieves the user equipment from permanently reading the full broadcast until the requested SIB is broadcasted. Instead the user equipment may regularly check the primary block in order to catch the on-demand SIB provision time for the requested SIB

It is advantageous not to fall into a sleep mode, therefore it may be expected from the user equipment to monitor the primary block for a couple of broadcast modification periods.

Preferably the requested on-demand SIB is then scheduled for the on-demand SIB provision time, which has a duration of one or more broadcast modification periods.

This means for the user equipment to check the primary block for the second information element and once it indicates a scheduling change to decode the broadcast at least until the requested on-demand SIB is fully read.

However when the first information element is set, it may for the user equipment still be of interest to receive the content change as well.

According to the fourth aspect of the invention it is proposed a user equipment configured for operating in a cellular network by means of a base node, the user equipment being configured to retrieve one or more system information blocks signaled by the base node, wherein the user equipment is configured to retrieve the primary block comprising a first information element and a second information element, and to decide based on the values of the first information element and the second information element and to retrieve at least one of the plurality of system information blocks.

The user equipment according to this aspect in particular comprises receiving and transmitting circuitry for communicating with the base node of the cellular network. Preferably the circuitry is implemented in a transceiver.

Further it provides an antenna, as well as processing circuitry for executing the operating software of the user equipment, including a software which implements the methods according to the third aspect of the invention. Further it provides volatile and/or permanent memory for maintaining software and configuration, in particular the values of the received system information.

The fourth aspect of the invention shares the advantages of the third aspect.

As it is shown this invention advantageously solves the depicted problem and offers a solution for signalling system information in a power efficient manner for the envisaged receiving user equipments.

### BRIEF DESCRIPTION OF THE DRAWINGS

The following description and the annexed drawings set forth in detail certain illustrative aspects and are indicative of but a few of the various ways in which the principles of the embodiments may be employed. Characteristics and advantages of the present invention will appear when reading the following description and annexed drawings of advantageous embodiments given as illustrative but not restrictive examples.
- Fig. 1: schematically shows a base node eNB of the type to which the invention applies to, carrying out SIB scheduling according to the prior art;
- Fig. 2: shows the situation of SIB signalling as known from the prior art;
- Fig. 3: represents an exemplifying order of SIB signalling known from the prior art;
- Fig. 4: shows a time flow of SIB signalling according to an embodiment of the invention;
- Fig. 5: shows a corresponding situation of SIB signalling as another embodiment of the invention.

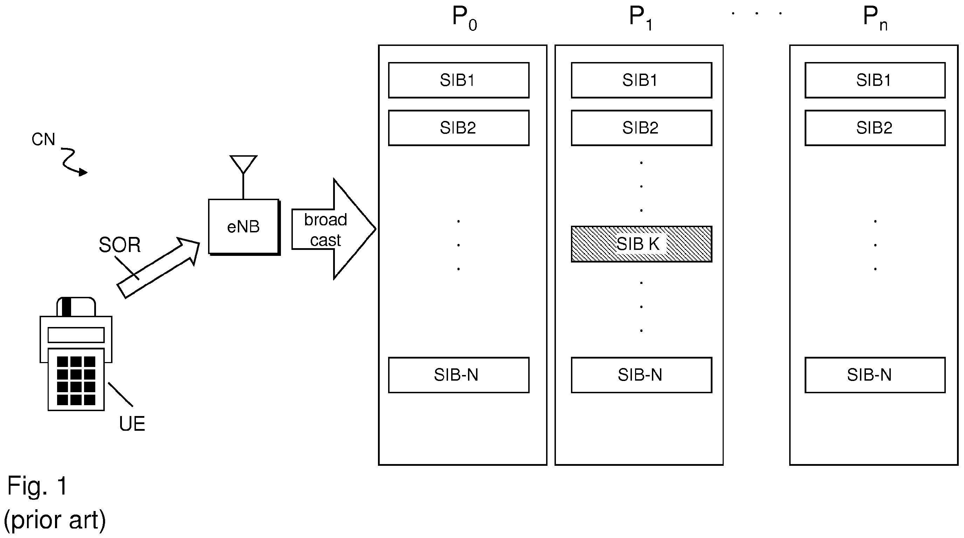

FIG. 1 schematically shows a base node eNB of the type to which the present invention is applied to as an embodiment. The base node is part of a cellular network CN and is configured to be communicatively linked to a plurality of user equipments UE. Such communication link is typically covering a broadcast or a dedicated link. At least in the latter case the user equipment is camping on the base node, and is consequently able to transmit signals to the base node, in uplink direction.

The base node is configured to provide system information items in a plurality of system information block SIB, here marked as SIB1 to SIB-N. The technology standard defines which system information items are carried by which system information block, and consequently how many system information blocks are available.

With recent developments of the technology standard the on-demand SIB provisioning was introduced allowing the base node to avoid signalling all SIBs throughout the whole time.

This is indicated in this figure, where the user equipment UE is camping on base node eNB. The eNB is broadcasting SIBs in its cell. As indicated at least the SIBs SIB1, SIBs, SIB-N are broadcasted. However, the base node eNB is configured to broadcast more system information blocks, an example is shown with SIB-K.

The camping user equipment UE may send a system information on-demand request SOR to the base node, requesting to schedule for broadcasting additional SIBs, which are not regularly broadcasted. Such broadcasted SIBs can then be retrieved by all user equipments, even if they are not camping on the base node, but are in sufficient proximity to retrieve the broadcast signals. As it is shown in the on-demand system information provisioning period Po three SIBs are shown to be transmitted. All of them are for the time being marked as being permanently broadcasted.

In response to the system information on-demand request SOR of the user equipment the base node then in on-demand SIB provisioning P₁ additionally transmits SIB K in its broadcast. The user equipment is able to retrieve this SIBs from the broadcast. After an on-demand system information provisioning period the requested SIB-K is not broadcasted anymore, as long as no camping user equipment UE requests with a new system information on-demand request SOR to schedule the broadcasting again.

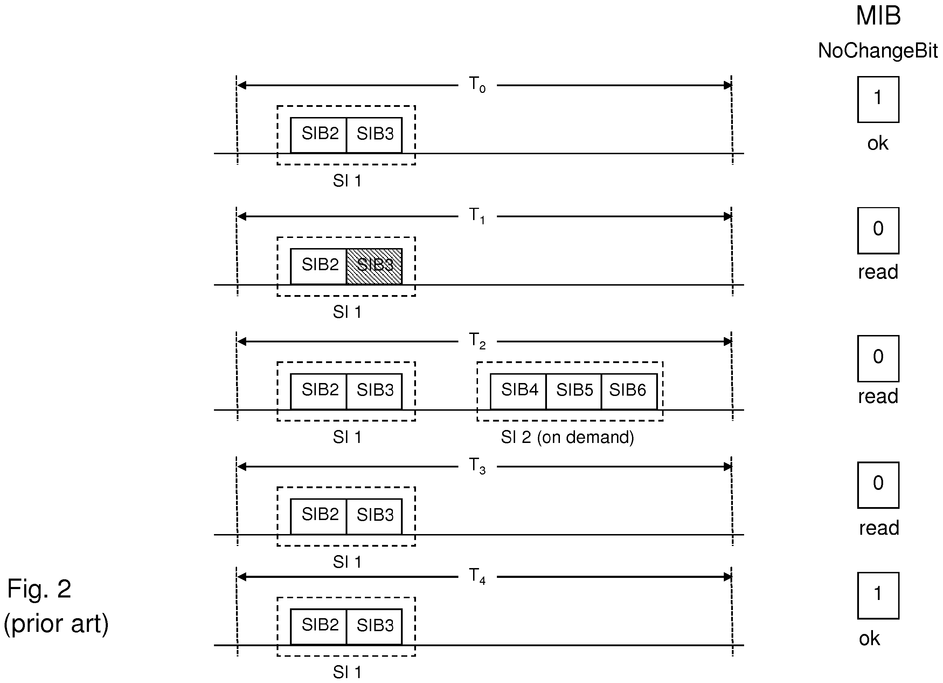

In FIG. 2 it is shown how the prior art copes with changes in system information for user equipments with limited power resources, and how the on-demand broadcasting jeopardized this approach.

It is shown in a simplified manner the signalling of SIBs in a consecutive order of broadcast modification periods T₀-T₄. In this example it is assumed that an on-demand system information provisioning period P lasts one broadcast modification period T.

Further it is signalled, preferably in the Master Information Block MIB, a no-change-bit, indicating that no change has happened in the SIBs compared to the previous broadcast modification period. This no-change-bit was introduced in order to allow user equipments which are regularly scanning the MIB, but do not permanently read all the SIBs due to power reduction reasons, to check the SIBs only when a change has happened. After completely reading all SIBs, a user equipment may then regularly check for changes in the SIBs. Alternatively or additionally a counter is signalled, preferably in the SIB1, which is increased with each change on a SIB.

For period T₀ it is indicated in the no-change-bit, that no change has happened since the last period. In this exemplifying embodiment this is indicated with setting the bit. A user equipment which receives this no-change-bit, and which has already read all SIBs would have no reason to decode the SIBs.

In the next period T₁ however a content change in SIB3 has happened, indicated through the hashed rectangle. Consequently the no-change-bit changes to 0. For a user equipment camping on the base node and receiving this no-change-bit this would trigger reading the SIBs. Preferably it is optimized when in the most frequently signalled SIB, in particular the SIB1, the user equipment gets an indication in which SIB a change has happened. As the SIB1 is usually the longest SIB, it would be an alternative but no real advantage to read the SIB1 permanently instead checking the no-change-bit of the MIB. In the next period T₂ however no content change has happened, but due to a system information on-demand request from one camping user equipment the base node now signals on-demand SIBs in SI container SI 2. This is following the scheduled SIB broadcast feature. Consequently, due to the fact that a change has happened compared to the previous period T₁, the no-change-bit remains unset.

This causes user equipments who are monitoring the no-change-bit to read the SIBs again just for figuring out that nothing more is signalled than the already known SIBs. The on-demand signalled SIBs may also be read before, or are of no interest to such a user equipment. In summary, the reading of the SIBs, triggered through the unset no-change-bit, was in vain for those user equipment which did not request the on-demand SIB signalling.

In the following period T₃ the on-demand SIBs are not signalled anymore. For this example the signalling lasts only one broadcast modification period. If it is longer, the following situation would happen consequently somewhat later, but other on-demand SIBs could be signalled instead.

The difference between transmitting the on-demand SIBs and not transmitting the on-demand SIBs leads to the situation that again the no-change-bit remains unset. Consequently the user equipment would again try to read the SIBs, again with the result that no content change has happened. Consequently also this read efforts - and the power consumption invested for that - was in vain again.

In the next period T₄ really no change has happened and the no-change bit is set. The user equipment would not read the SIBs again.

It can be seen that although only one content change has happened through five periods, the user equipment monitoring the no-change-bit would in three periods read the SIBs. Here is room for improvement.

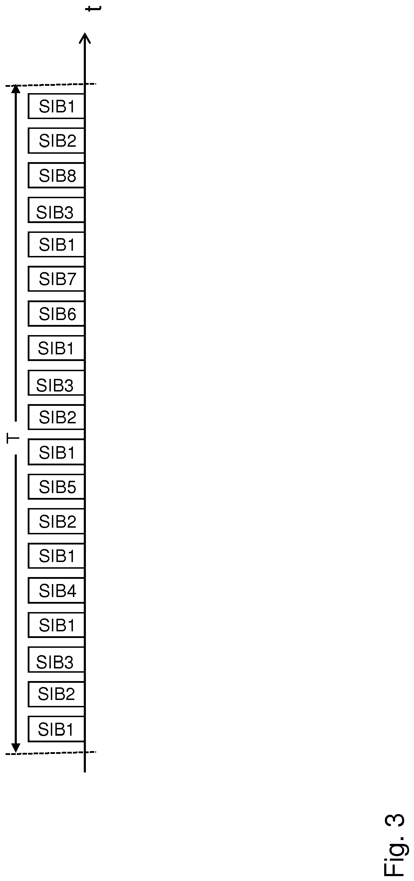

FIG. 3 shows in an example how the distribution of SIB signalling in a broadcast modification period T may look like. It is visible that some SIBs in particular the SIB1 is signalled more often than others.

Should one of the SIBs be rated as on-demand SIB, means only scheduled on request from a camping user equipment, it would only be signaled in the scheduled slot, when requested, otherwise the slot preferably remains free. E.g. would SIB7 be on demand scheduled, then it is shown in FIG. 3 the situation where it is requested, in another time period at the position of SIB7 no signalling would happen.

During a broadcast modification period T depending on the type of SIB the user equipment consequently may achieve the respective system information earlier than other SIBs.

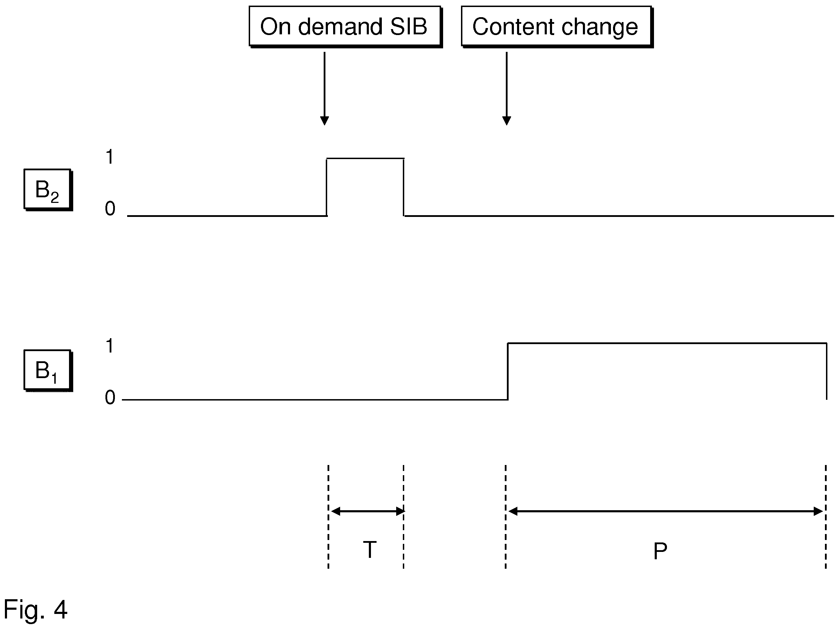

In FIG. 4 it is shown in a preferred embodiment of present invention how changes in the SIB signalling over different periods may be made available for a user equipment UE.

Here it is shown the first information element B₁ and the second information element B₂. Both are implemented as flag or bit and can take the values 0 and 1. They are signaled as part of the primary block, in particular the MIB.

The first information element B₁ indicates a content change. If the bit is set to 1 a content change has happened. Otherwise the bit is set to 0 (or vice versa, depending upon the implementation).

In this embodiment a content change is identified in case the value of at least one system information item happens compared to the previous broadcast modification period. However, in case a system information item is designated for indicating information related to on-demand SIB scheduling, then in this exemplifying embodiment this change of a system information item is not considered as a content change.

Further the adaption carried out by the base node, that a system information block is supposed to be scheduled permanently, although being scheduled on-demand before, or vice versa, is not considered as content change.

Finally a change of on-demand system information scheduling is obviously not viewed as a content change as well.

The first information element B₁ is activated in case of a content change for a period P, here a multiple of a broadcast modification period.

In one embodiment this time complements to the SIB validity period, which is the maximum time a system information item stays valid, without the need for re-reading through the user equipment.

The second information element B₂ indicates a change in on-demand SIB signalling, wherein if the bit is set a change in the on-demand SIB signalling is indicated (or vice versa, depending upon the implementation).

A change of on-demand SIB signalling comprises at least the activation of the transmission of a scheduled system information block SIB, called the on-demand system information transmission. This relates to a system information block which is not broadcasted as long as no user equipment sends a system information on-demand request SOR. This also includes the beginning of the transmission of a previously not signalled system information block, where it is decided to signal this system information block permanently from now on. Additionally a deactivation of a previously activated on-demand system information transmission preferably belongs to a change of on-demand SIB signalling. This may also include a deactivation due to the new rating of being an on-demand scheduled SIB, which was up to now not the case.

The second information element B₂ is activated for a period T, which refers to the on-demand system information provisioning period. This is at least a multiple of a broadcast modification period.

The two periods may be alike, or the one is longer than the other or vice versa. Typically the duration of both periods has no dependencies.

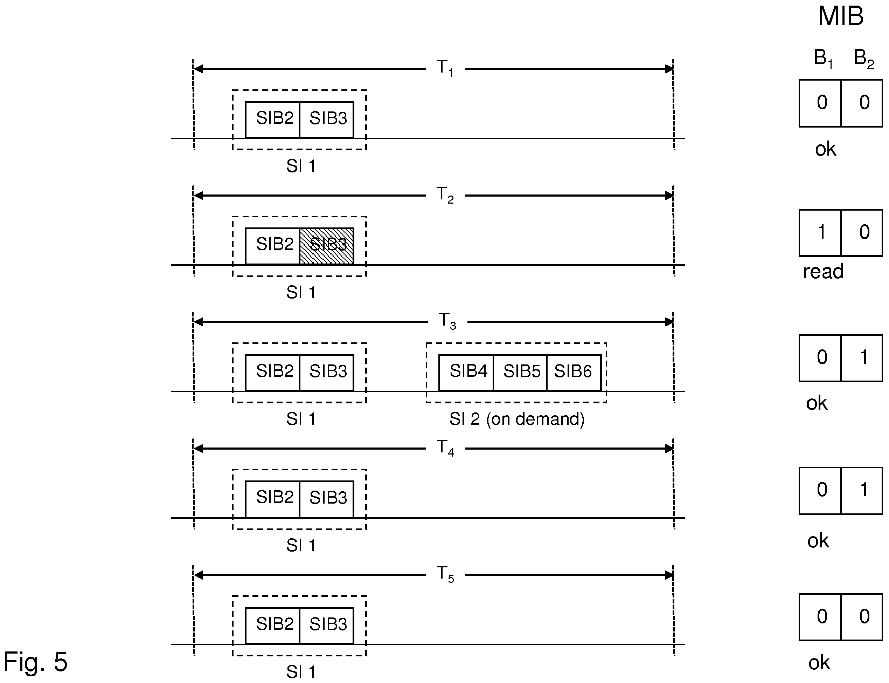

In Fig. 5 it is visible the outcome of the exemplifying improvement of the invention. Here the situation of above is depicted for the case of the two periods T and P last each one broadcast modification period, or any other time alike.

The signalling of SIBs is alike the signalling in Fig. 2, but with the new introduced first information element B₁ and the second information element B₂ the signalling situation is more transparent for a user equipment which monitors the first and second information element only.

In the first period T₁ (= P) the simplified situation of two system information blocks SIB2, SIB3 in one system container SI1 is broadcasted by the base node eNB. Both system information blocks SIB2 and SIB3 are permanently broadcasted, and they have no change in values of its system information items compared to the previous period. Additionally no on-demand scheduled SIBs are signaled, which was also the case in the previous period. Consequently both the first information element B₁ and the second information element B₂ have the value 0, indicating no content change and no change in on-demand SIB scheduling.

In the next period T₂ a change of the content in SIB3 however took place, indicated through the hashed rectangle. This may be the when cell-reselection criteria are refined, e.g. a timer for triggering cell reselection.

For a user equipment camping on the base node this is a necessary information in order to well perform cell-reselection from now on. In order to make the camping user equipments aware of this content change, the value of the first information element B₁ is set to 1. The second information element B₂ remains unchanged.

This helps a user equipment just checking for a content change to then decode the SIBs, when the first information element B₁ is set.

However a user equipment which before that period T₂ requested an on-demand SIB scheduling from the base node, knows that it may now read the SIB3 again - in particular when e.g. in SIB1 it is indicated in which system information block SIB a change has happened - but does not need to further read the broadcast with the expectation that the on-demand SIB scheduling leads to broadcasting the requested SIB.

In the following period T₃ the content of the permanently signaled system information blocks SIB2 and SIB3 remains unchanged. That means that the content change happened with the previous T₂ stays stable.

However, now the on-demand scheduled system information blocks SIB4, SIB5 and SIB6 of SIB container SI2 are now broadcasted by the base node. This change compared to the previous period T₂ is therefore a change in on-demand SIB scheduling, and hence the second information element B₂ now has the value 1.

For a user equipment UE camping on the base node eNB without further activity in terms of on-demand SIBs this setting of the second information element B₂ may be ignored. As long as it does not request for on-demand SIB scheduling it may even omit reading the second information element B₂.

In contrast for a user equipment UE which before that requested an on-demand SIB scheduling from the serving base node, this indicates that now a change in on-demand SIB scheduling took place and consequently may decode the SIBs throughout this broadcast modification period.

Still, other on-demand scheduled SIBs may be broadcasted now, so the reading would still be in vain. Preferably in another system information block a system information item is introduced which shows which on-demand SIBs are currently scheduled, if any. This is typically situated in SIB1, which is broadcasted most often, as indicated in Fig. 3, however this SIB1 is the longest of all SIBs, and therefore for a user equipment waiting for a requested on-demand SIB it is far more effective in terms of power consumption to monitor the second information element B₂, in particular due to the fact that it needs to monitor the first information element B₁, both situated in the primary block MIB, anyhow.

In the next period T₄ the on-demand SIB scheduling is switched off again. In this example therefore the requested on-demand SIBs were only broadcasted for one period T.

That the on-demand SIB signalling is switched of, that means a change of on-demand SIB scheduling took place, is again indicated in the second information element B₂.

Alternatively the second information element B₂ is only set to 1 as long as at least one on-demand SIB is scheduled. In such an embodiment the second information element B₂ would already set to 0.

Both variants are encompassed by the invention. Regardless of the variant applied before, for the following displayed period T₅ it appears that neither a content change nor a change in on-demand SIB scheduling has happened compared to period T₄. Consequently both the first information element B₁ and the second information element B₂ carry the value 0.

In the above detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the scope of the invention. In addition, it is to be understood that the location or arrangement of individual elements within each disclosed embodiment may be modified without departing from the scope of the invention. The above detailed description is, therefore, not to be taken in a limiting sense, and the scope of the present invention is defined only by the appended claims, appropriately interpreted, along with the full range of equivalents to which the claims are entitled.

## Claims

1. Method for a base node (eNB) of a cellular network (CN) for signalling system information items to at least one user equipment (UE) camping on the base node, the base node (eNB)being configured to signal system information items in one or more system information blocks (SIB),
wherein at least one system information block (SIB) is transmitted only for a limited period of time lasting at least one broadcast modification period (T), hereinafter the on-demand system information provisioning period (P), in response to the base node (eNB) receiving a system information on-demand request (SOR) for signalling the at least one system information block (SIB) by at least one of the user equipments (UE), the base node (eNB) further signalling a primary block periodically,
the method comprising the step of:
- signalling at least during said broadcast modification period (T) in the primary block (MIB) one first information element (B₁) indicating whether in at least one system information item of at least one signaled system information block a content change appeared in comparison with the one or more system information blocks signaled prior to said broadcast modification period (T), and
- signalling during said on-demand system information provisioning period (P) in the primary block (MIB) a second information element (B₂) indicating whether a change in system information block scheduling appeared compared to the scheduled system information prior to said on-demand system information provisioning period (P).

2. Method according to claim 1,
wherein said change in system information block scheduling is at least one out of the group of:
- activation of system information block transmission in response to said system information on-demand request (SOR) from at least one user equipment (UE), hereinafter on-demand system information transmission,
- deactivation of on-demand system information transmission.

3. Method according to at least one of the claims 1 or 2,
wherein the first information element (B₁) indicates said content change for a multiple of the broadcast modification period (T).

4. Method according to at least one of the claims 1 to 3,
wherein the second information element (B₂) indicates said change in system information block scheduling for the duration of a validity time of the provided system information.

5. Method according to at least one of the claims 1 or 4,
wherein a content change is a change in the value of at least one of the system information items of at least one of the system information blocks, except scheduling related information of the first system information block.

6. Method according to at least one of the claims 1 to 5,
wherein the base node (eNB) is configured to receive from a user equipment (UE) a system information on-demand request (SOR) for on-demand scheduling of at least one system information block,
wherein in response the method further comprises for the base node (eNB) the step of signalling said at least one system information block (SIB), and the step of starting to signal in the primary block the second information element (B₂) indicating that the scheduled one or more system information blocks differ from the one or more signaled system information blocks of previous broadcast modification period (T).

7. Method according to claim 6,
further comprising deriving from the system information on-demand request (SOR) from the user equipment (UE) comprises an indication about the number of broadcast modification periods the on-demand system information provisioning period shall last, and wherein the step of signalling the second information element (B₂) lasts the indicated number of broadcast modification periods.

8. Base node (eNB) of a cellular network (CN) configured for signalling system information items to at least one user equipment (UE) camping on the base node, the base node (eNB)being configured to signal system information items in one or more system information blocks,
wherein at least one system information block (SIB) is transmitted only for a limited period of time lasting at least one broadcast modification period (T), hereinafter the on-demand system information provisioning period (P), in response to the base node (eNB) receiving a system information on-demand request (SOR) for signalling the at least one system information block by at least one of the user equipments (UE), the base node (eNB) further signalling a primary block periodically, wherein the base node is configured:
to signal at least during said broadcast modification period (T) in the primary block one first information element (B₁) indicating whether in at least one system information item of at least one signaled system information block a content change appeared in comparison with the one or more system information blocks signaled prior to the broadcast modification period, and
to signal during said on-demand system information provisioning period (P) in the primary block a second information element (B₂) indicating whether a change in system information block scheduling appeared compared to the scheduled system information prior to said on-demand system information provisioning period.

9. Base node according to claim 8,
further configured to receive from a user equipment (UE) a system information on-demand request (SOR) for on-demand scheduling of at least one system information block,
wherein in response the base node (eNB) is configured to signal said at least one system information block, and
said signalling in the primary block of the second information element (B₂) indicates that the signaled one or more system information blocks differ from the signaled one or more system information blocks of the of previous broadcast modification period (T).

10. Base node according to at least one of the claims 8 or 9,
configured to derive from the system information on-demand request (SOR) from the user equipment (UE) an indication about the number of broadcast modification periods (T) the on-demand system information provisioning period (P) shall last,
and wherein said signalling of the second information element (B₂) lasts the indicated number of broadcast modification periods.

11. Method for operating a user equipment (UE) configured for operating in a cellular network (CN) by means of a base node (eNB), the user equipment (UE) being configured to retrieve one or more system information blocks signaled by the base node (eNB), comprising the steps of:
retrieving the primary block comprising a first information element (B₁) and a second information element (B₂),
deciding based on the values of the first information element (B₁) and the second information element (B₂), about retrieving at least one of the plurality of system information blocks.

12. Method according to claim 11,
further comprising after completely receiving the plurality of system information blocks the step of receiving a system information block (SIB) only in case the first information element (B₁) indicates a content change.

13. Method according to at least one of the claims 11 or 12,
the user equipment (UE) being further configured to request from the base node on-demand scheduling of at least one system information block (SIB), wherein the method further comprises the step of receiving said at least one system information block (SIB) in case the second information element (B₂) indicates a change in system information block scheduling.

14. User equipment (UE) configured for operating in a cellular network (CN) by means of a base node (eNB), the user equipment (UE) being configured to retrieve one or more system information blocks signaled by the base node (eNB),
wherein the user equipment (UE) is configured to retrieve the primary block comprising a first information element (B₁) and a second information element (B₂), and
to decide based on the values of the first information element (B₁) and the second information element (B₂) and to retrieve at least one of the plurality of system information blocks.

15. User equipment (UE) according to claim 14,
wherein the user equipment (UE) after completely receiving the plurality of system information blocks is configured to receive a system information block only in case the first information element (B₁) indicates a content change.

16. User equipment (UE) according to claim 14 or 15,
configured to request from the base node on-demand scheduling of at least one system information block,
further configured to receive said at least one system information block in case the second information element (B₂) indicates a change in system information block scheduling.
